# EUROPÄISCHE PATENTSCHRIFT

(11) **EP 3 185 726 B1**
(45) Veröffentlichungstag und Bekanntmachung des Hinweises auf die Patenterteilung: **08.01.2020**
(21) Anmeldenummer: 15748216.7
(22) Anmeldetag: 04.08.2015
(51) Int. Cl.: A47G 19/23, A47G 19/02, A47J 43/18

(54) **TELLER**
PLATE
ASSIETTE

(30) Priorität: 29.08.2014 DE 102014112439
(43) Veröffentlichungstag der Anmeldung: 05.07.2017
(73) Patentinhaber: Rienäcker, Klaus, 83135 Schechen-Pfaffenhofen (DE)
(72) Erfinder: Rienäcker, Klaus, 83135 Schechen-Pfaffenhofen (DE)
(74) Vertreter: HGF Europe LLP
(86) Internationale Anmeldenummer: PCT/EP2015/067896
(87) Internationale Veröffentlichungsnummer: WO 2016/030153

(56) Entgegenhaltungen:
- CH-A- 353 143
- CN-U- 202 843 119
- DE-A1- 19 625 467
- DE-U1- 7 935 610
- DE-U1- 29 603 460
- DE-U1- 29 607 574
- GB-A- 270 136
- GB-A- 2 462 326
- JP-U- S5 745 375
- US-A- 5 065 870
- US-A1- 2011 088 565

## Beschreibung

Die vorliegende Erfindung betrifft einen Teller. Teller werden allgemein verwendet um Speisen aufzunehmen bzw. zu präsentieren.

Teller für die Zubereitung, aber auch Präsentation bzw. Aufnahme von Speisen sind häufig Gegenstände, die nicht nur eine Form besitzen, die vom Zweck bestimmt wird, sondern designbestimmte Elemente besitzen. Insbesondere bei hochpreisiger Geschirrkeramik wird die Form erheblich vom Designschaffen bestimmt. Die Beispiele hierfür sind mannigfaltig und insbesondere ist es nicht unüblich mit namhaften Designern zusammenzuarbeiten um derartige Geschirrlinien zu entwickeln.

Häufig werden für bestimmte Speisen Designelemente verwendet, die für diese Speisen typisch sind.

Insbesondere bei Tellern, die der Aufnahme oder Präsentation von Fischgerichten dienen, sind Teller nicht unüblich, welche zumindest länglich oval ausgebildet sind um die Fischform in dem Design des Tellers fortzuführen.

Insbesondere gibt es auch Teller die sogar der Fischform bis hin zu angedeuteten Flossen entsprechen.

Aus der DE 146428 ist ein Tafelgerät zum Auftragen gekochter Fische bekannt, wobei dieses Tafelgerät aus einem stilisierten Fisch besteht, welcher als Untersatz dient und auf einem Teller angeordnet werden kann. Hierbei besitzt der stilisierte Fisch einen bogenartigen Mittelsteg, aus dem Stacheln hervorragen, die einen darauf gesetzten gekochten Fisch stützen sollen.

Aus der CN 20 284 311 9 U ist ein Teller bekannt, welcher zwei Paare von beabstandeten Stützfahnen besitzt, die auf der Tellerfahne angeordnet sind und es ermöglichen sollen, einen zwischen die Fahnen gesteckten Fisch aufrecht zu halten.

Aus der DE 7935610 U1 ist eine Vorrichtung zum Grillen von Fischen bekannt, wobei diese Vorrichtung aus einer aus Blech gefertigten Brücke besteht, welche auf einen insbesondere Metallteller aufsteckbar bzw. aufnietbar oder aufschweißbar ist. Diese Vorrichtung soll insbesondere messerförmig ausgebildet sein. DE 7935610 U1 offenbart ein Teller gemäß dem Oberbegriff von Anspruch 1.

Aufgabe der Erfindung ist es einen Teller für die Aufnahme und Präsentation und/oder das Garen von Fischen zu schaffen, welcher es ermöglicht, von allen Seiten des Fisches einen gleichmäßigen Gar- und Oberflächenzustand zu erreichen, eine ästhetische Präsentation zu ermöglichen und eine optimierte Verstaubarkeit zu gewährleisten.

Die Aufgabe wird mit einem Teller mit den Merkmalen des Anspruchs 1 gelöst.

Vorteilhafte Weiterbildungen sind in Unteranspruch 2 gekennzeichnet.

Der Erfinder hat erkannt, dass die liegende Präsentation oder das liegende Servieren von Fischen dazu führt, dass der Fisch unterschiedliche Gar- und/oder Wärmezustände besitzt und zudem bei Fischen mit kross gebratener Haut bzw. Oberfläche sich eine kross gebratene Seite, nämlich die, auf der der Fisch liegt, meist nachteilig verändert und weich wird.

Um dem abzuhelfen wird erfindungsgemäß ein Teller für die Aufnahme und/oder das Garen und/oder das Servieren von Fischen so ausgestaltet, dass sich entlang der Längsachse des Tellers und/oder des zu präsentierenden Fisches eine in etwa halb diskusförmige länglich ovale Ausformung erstreckt, auf welche der Fisch mit seiner Bauchhöhle aufsetzbar ist.

Hierdurch wird der Fisch mit dem Rücken nach oben aufrecht präsentiert, so dass einerseits Braten- bzw. Kochsaft auf den Teller abfließen kann und somit die Haut des Fisches kross gegart werden kann, zudem wird, sofern der Fisch mit diesem Teller gegart wird, eine rundum gleichmäßige Garung erzielt, welche zudem ohne Bratfett erfolgen kann. In diesem Fall wird der Fisch auf dem Teller gegart und auch vorteilhafterweise serviert.

Hierbei kann der Teller aus jeder Form von Keramik oder aus Metall bestehen.

Die Erfindung wird anhand einer Zeichnung beispielhaft erläutert. Es zeigen dabei:

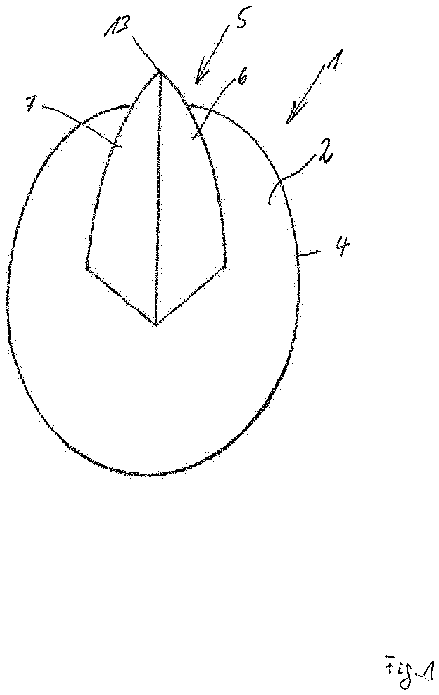

Fig. 1 einen erfindungsgemäßen Teller in einer perspektivischen Ansicht von vorne;
Fig. 2 den Teller nach Fig. 1 in einer perspektivischen Seitenansicht;
Fig. 3 den Teller nach Fig. 1 in einer Draufsicht;

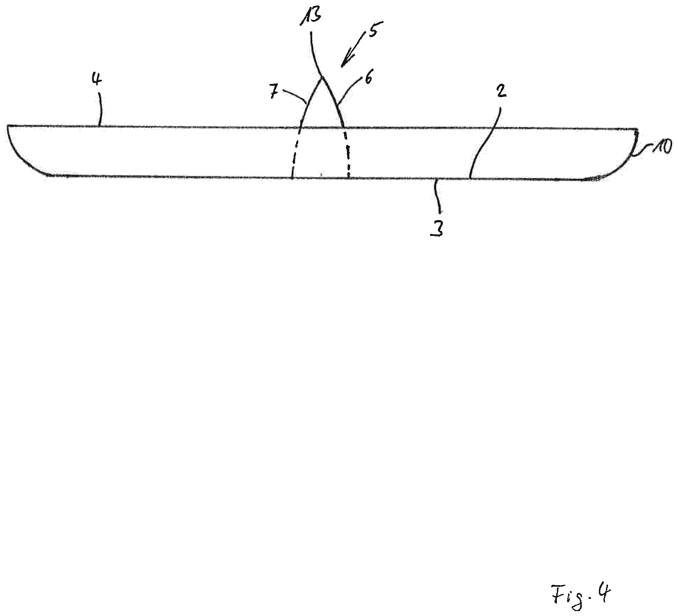

Fig. 4 den erfindungsgemäßen Teller in einer weiteren Ausführungsform mit Rand in einer Ansicht von vorne;

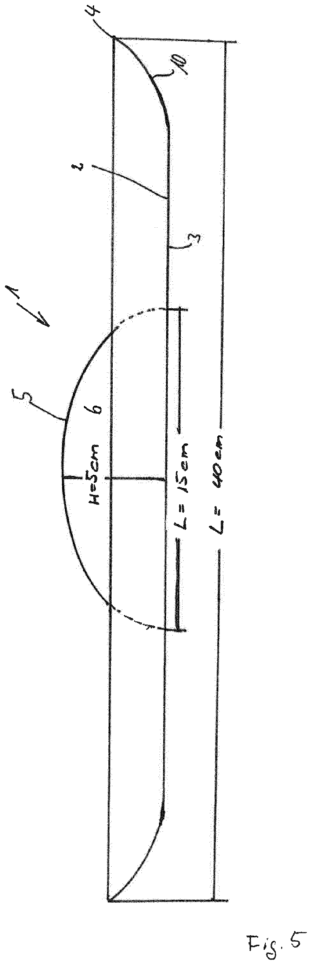

Fig. 5 die Ausführungsform nach Fig. 4 in einer Seitenansicht;
Fig. 6 einen Stapel erfindungsgemäßer Teller in einer stark schematisierten Ansicht;

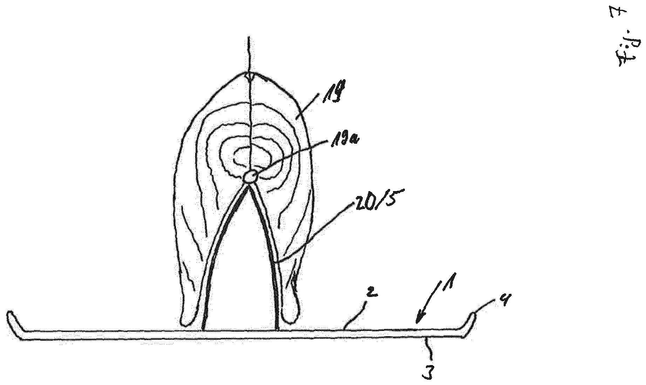

Fig. 7 die Ausführungsform der Ausformung in Tellerform in einer Draufsicht;

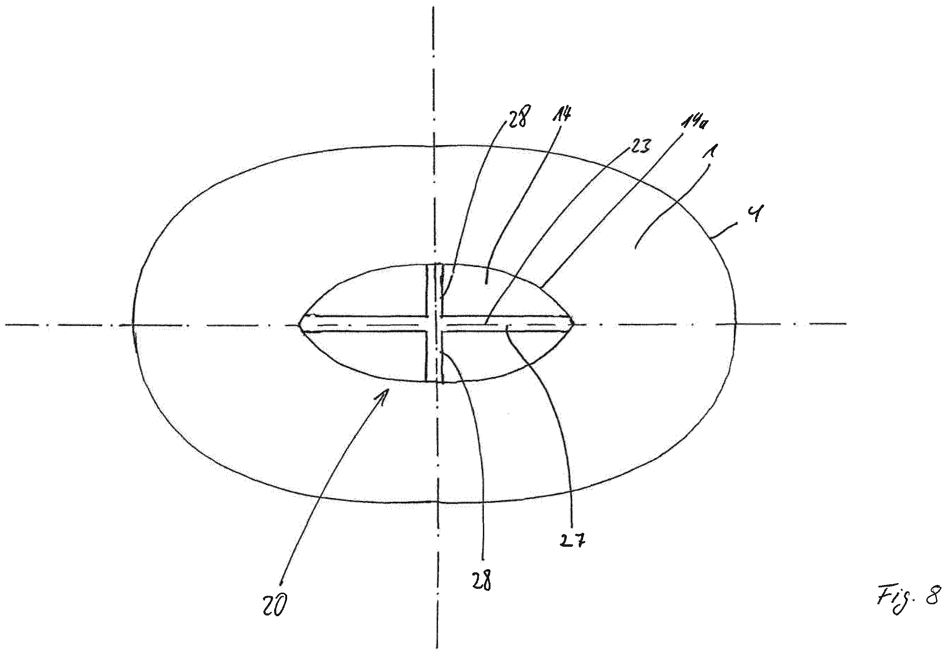

Fig. 8 schematisiert eine Schnittansicht auf einen Teller mit einer entsprechenden Auswölbung oder einem Aufsatz und einem darauf aufgesetzten Fisch in einer teilgeschnittenen Ansicht.

Ein erfindungsgemäßer Teller 1 besitzt einen Spiegel 2, eine Tellerunterseite 3 und wird von einem umlaufenden Tellerrand 4 begrenzt.

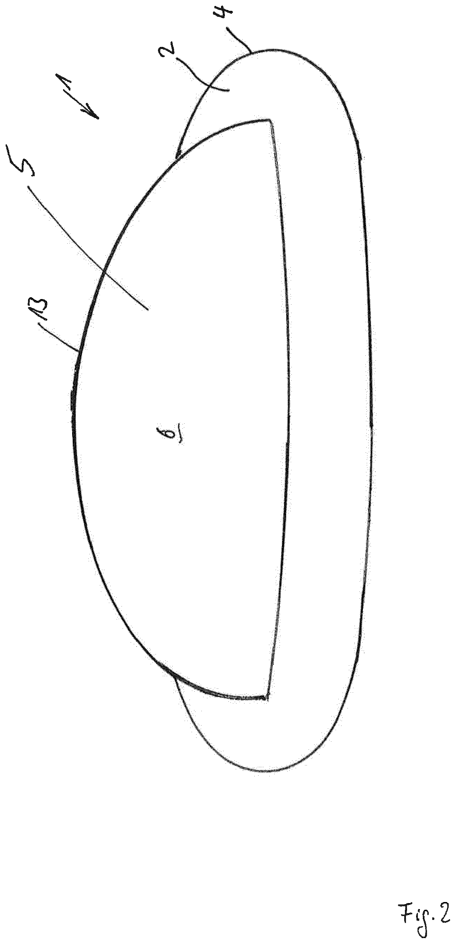

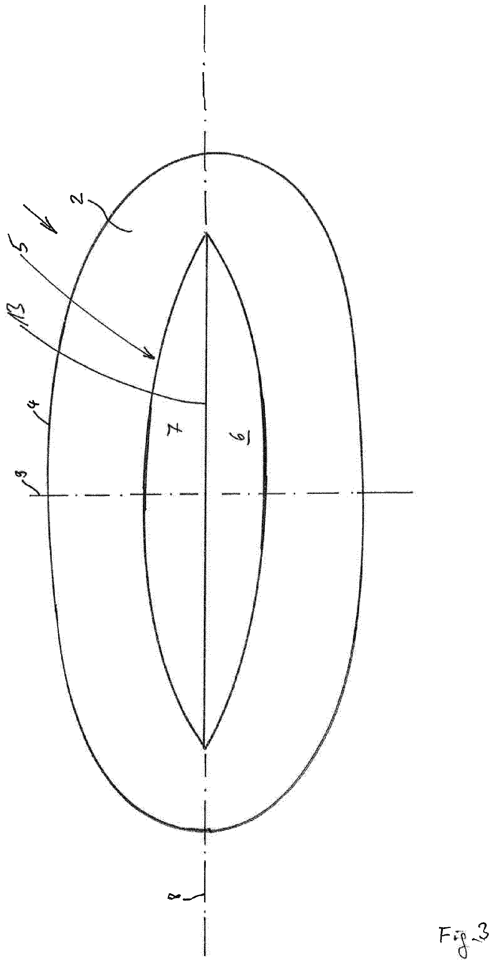

Der Teller besitzt erfindungsgemäß in der Mitte eine Auswölbung 5, wobei die Auswölbung 5 insbesondere länglich bogenartig mit zwei hieraus resultierenden Flanken 6, 7 ausgebildet ist. Insbesondere bei oval ausgebildeten Tellern (Figuren 2, 3) ist die länglich bogenartige Auswölbung 5 in ihrer Längserstreckung an der Längsachse 8 des Tellers 1 orientiert, wobei vorzugsweise die Auswölbung 5 symmetrisch zur Längsachse 8 und ebenfalls symmetrisch zur Querachse 9 ausgebildet ist.

Hierbei besitzt der Teller 1 eine wie auch immer ausgebildete Fahne 10 besitzen, wobei an der Tellerunterseite 3 zumindest ein Fuß 11 ausgebildet sein kann.

Wie bei Tellern üblich ist der Fuß 11 hierbei ein Ringsteg, der dem Verlauf des Tellers folgt.

Besonders bevorzugt ist die Auswölbung 5 derart ausgebildet, dass die Flanken 6, 7 nicht zu steil sind, wobei ein Kamm 13 der Auswölbung 5 vorzugsweise soweit hochsteht, dass ein aufzunehmender Fisch zumindest teilbereichsweise an seiner Mittelgräte gestützt wird um ein Zusammenfallen der Seiten des Fisches im Bereich der Körperhöhle zu vermeiden.

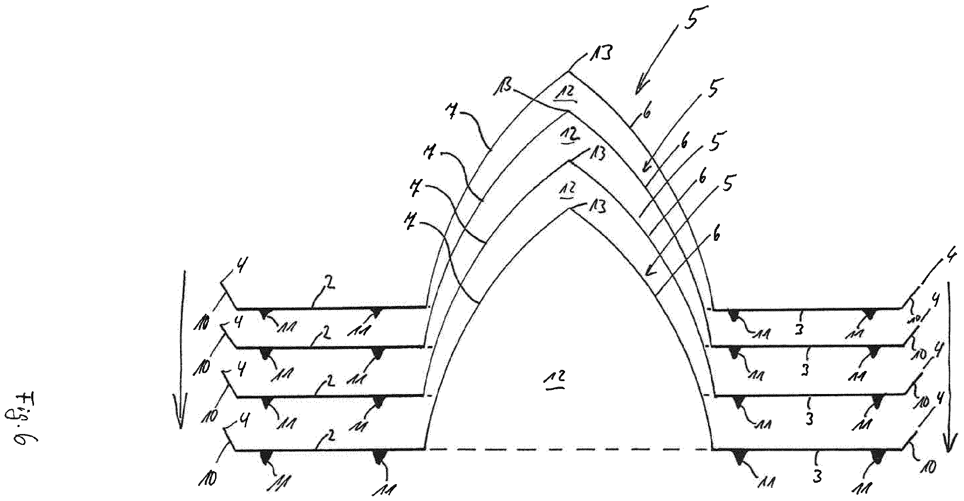

Die Flanken 6, 7 sind im Bereich ihres Ursprungs auf dem Spiegel 2 vorzugsweise so weit voneinander beabstandet, dass im Verhältnis zur Höhe der Auswölbung 5, d. h. insbesondere zum höchsten Punkt des Scheitels 13, ein zu starkes Aufspreizen des Fisches einerseits vermieden wird und andererseits jedoch die Flanken derart verlaufen, dass die Teller 1 übereinander stapelbar sind (Fig. 6).

Um die Stapelbarkeit zu verbessern und zu verhindern, dass die Flanken 6, 7 einer Auswölbung 5 eine zu starke Pressung auf die darüber liegenden Flanken 6, 7 eines darüber liegenden Tellers ausüben, sind der oder die Füße 11 der Teller vorzugsweise so ausgebildet, dass der Vorstand von der Unterseite 3 des Tellers 1 dafür sorgt, dass die Teller zwar ineinander stapelbar sind, die Flanken aber nicht mit Pressung aufeinander liegen, um eine Sprengung oder einen zu starken Abrieb an der Oberfläche zu vermeiden.

Der Teller 1 kann hierbei insbesondere aus einer Keramik und insbesondere Porzellan ausgebildet werden.

Bevorzugte Formgebungsverfahren für einen erfindungsgemäßen Teller 1 sind alle möglichen keramischen Formgebungsverfahren, wobei in besonders einfacher Weise und auch kostengünstig bei kleineren Serien der Schlickeguss in Gipsform möglich ist.

Darüber hinaus können derartige Teller auch aus Kunststoff hergestellt werden, wobei der Kunststoff dann vorzugsweise als Spritzpressformlinge erzeugt wird.

Bei einer Ausbildung des Teilers, insbesondere zur Zubereitung von Fischen im Backofen, kann der Teller auch aus Metall, insbesondere emailliertem Metall, oder Edelstahl ausgebildet sein, wobei der Teller hierbei vorzugsweise in Tiefziehverfahren erzeugt wird um eine gute Stapelbarkeit zu ermöglichen.

Dies schließt jedoch nicht aus, dass der Teller als Zubereitungsteller pfannenartig auch aus Aluminium, druckgegossenem Aluminium, geschmiedetem Stahl oder Gusseisen ausgebildet ist.

Hierbei kann ein solcher Teller, wenn er der Zubereitung von Fischen dient, auch zum Servieren derselben verwendet werden.

Vorteilhafterweise können unterschiedliche Tellerformen, insbesondere unterschiedliche Auswölbungsformen und Tellerlängen für unterschiedliche Fische verwendet werden, beispielsweise Forellen, Zander, Hechte, Karpfen und andere Speisefische.

### Bezugszeichenliste:

- 1: Teller/Platte
- 2: Spiegel
- 3: Tellerunterseite
- 4: umlaufender Tellerrand
- 5: Auswölbung
- 6: Flanke
- 7: Flanke
- 8: Längsachse
- 9: Querachse
- 10: Fahne
- 11: Fuß

- 13: Kamm/Scheitel

- 19: Fisch
- 20: Aufsatz
- 21: Flanke
- 22: Flanke
- 23: Scheitel
- 24: Aufstandkante
- 25: Aufstandkante
- 26: Hohlraum
- 26a: Stoßkante
- 27: Längsbogen
- 28: Querbogen
- 29: Bogen
- 30: Säulen
- 31: zapfenartige Elemente
- 32: Öffnungen
- 33: Wandabschnitte

## Patentansprüche

1. Teller zum Zubereiten und/oder Servieren eines Speisefisches, der einen Spiegel (2), eine Tellerunterseite (3) und einen umlaufenden Tellerrand (4) besitzt, wobei der Tellerrand (4) eine Fahne (10) begrenzt, **dadurch gekennzeichnet, dass** der Teller (1) eine Auswölbung (5), die zum Einführen in die Körperhöhle eines ausgenommenen Speisefisches ausgebildet ist, besitzt, so dass der Speisefisch in aufrechter Position durch die Auswölbung (5) gestützt anordenbar ist, die Auswölbung (5) länglich bogenartig oder in etwa halb diskusartig mit zwei Flanken (6, 7) ausgebildet ist, wobei die Flanken (6, 7) ihren Ursprung auf dem Spiegel haben und gemeinsam einen Kamm oder Scheitel (13, 23) der Auswölbung (5) ausbilden, wobei die Auswölbung (5) einstückig am Teller (1) derart ausgebildet ist, dass die Flanken (6, 7) der Auswölbung (5) einen zur Tellerunterseite (3) offenen Hohlraum (26) begrenzen, so dass die Auswölbung (5) eines darunter liegenden Tellers (1) in den Hohlraum (26) zur Stapelung der Teller einschiebbar ist.

2. Teller nach Anspruch 1, **dadurch gekennzeichnet, dass** der Teller (1) und die Auswölbung (5) aus Keramik, Metall, Kunststoff oder dergleichen ausgebildet ist.

## Claims

1. Plate for preparing and/or serving an edible fish, which has a mirror (2), a plate underside (3) and a circumferential plate edge (4), the plate edge (4) defining a flag (10), **characterized in that** the plate (1) has a bulge (5), which is designed for insertion into the body cavity of a gutted edible fish, so that the edible fish can be arranged supported in an upright position by the bulge (5), the bulge (5) is formed in an elongated arcuate manner or in an approximately semi-discus-like manner with two flanks (6, 7), the flanks (6, 7) having their origin on the mirror and together forming a crest or apex (13, 23) of the bulge (5), the bulge (5) being formed in one piece on the plate (1) in such a way that the flanks (6, 7) of the bulge (5) delimit a cavity (26) which is open towards the lower side (3) of the plate, so that the bulge (5) of a plate (1) lying underneath can be pushed into the cavity (26) for stacking the plates.

2. Plate according to claim 1, **characterized in that** the plate (1) and the bulge (5) are made of ceramic, metal, plastic or the like.

## Revendications

1. Assiette pour la préparation et/ou le service d'un poisson comestible, qui présente un miroir (2), une face inférieure de l'assiette (3) et un bord périphérique d'assiette (4), le bord d'assiette (4) délimitant un drapeau (10), **caractérisée en ce que** l'assiette (1) présente une protubérance (5), qui est conçue pour insertion dans la cavité du corps d'un poisson comestible éviscéré, afin de permettre le positionnement du poisson comestible supporté par la protubérance (5) dans une position droite, la protubérance (5) est formée d'une manière arquée oblongue ou d'une manière approximativement semi-discale avec deux flancs (6, 7), les flancs (6, 7) ayant leur origine sur le miroir et formant ensemble une crête ou un sommet (13, 23) de la protubérance (5), la protubérance (5) étant formée d'une seule pièce sur l'assiette (1) de telle sorte que les flancs (6, 7) de la protubérance (5) délimitent une cavité (26) ouverte vers le côté inférieur (3) de l'assiette, de sorte que la protubérance (5) d'une assiette (1) située au-dessous puisse être poussée dans la cavité (26) afin d'empiler les assiettes.

2. Assiette selon la revendication 1, **caractérisée en ce que** l'assiette (1) et la protubérance (5) sont en céramique, métal, plastique ou similaire.
